# EUROPEAN PATENT APPLICATION

(11) **EP 4 488 816 A1**
(43) Date of publication of application: **08.01.2025**
(21) Application number: 23773599.8
(22) Date of filing: 06.03.2023
(51) Int. Cl.: G06F 3/14, G06F 9/451

(54) **DATA TRANSMISSION METHOD, CLOUD DESKTOP VIRTUAL MACHINE, CLOUD TERMINAL, AND READABLE STORAGE MEDIUM**

(30) Priority: 23.03.2022 CN 202210287284
(71) Applicant: ZTE Corporation, Shenzhen, Guangdong 518057 (CN)
(72) Inventor: CHEN, Hongling, Shenzhen, Guangdong 518057 (CN)
(74) Representative: Savi, Massimiliano
(86) International application number: PCT/CN2023/079877
(87) International publication number: WO 2023/179348

(57) **Abstract**

A data transmission method, a cloud desktop virtual machine, a cloud terminal, and a readable storage medium. The data transmission method comprises: receiving a peripheral input signal from a cloud terminal (S200); updating and capturing a target screen image according to the peripheral input signal (S210); comparing the target screen image with a cache screen image of a virtual machine cache region to obtain a comparison result (S220); when the comparison result is that the virtual machine cache region has a first cache screen image identical to the target screen image, generating a cache hit instruction corresponding to the first cache screen image and sending same to the cloud terminal, so as to cause the cloud terminal to extract a second cache screen image corresponding to the cache hit instruction from a cache region of the cloud terminal, and display same, the second cache screen image in the cache region of the cloud terminal being obtained by synchronizing the first cache screen image in the virtual machine cache region (S230).

## Description

### CROSS-REFERENCE TO RELATED APPLICATION

This application is filed on the basis of the Chinese patent application No. 202210287284.1 filed March 23, 2022, and claims priority of the Chinese patent application, the entire contents of which are incorporated herein by reference.

### TECHNICAL FIELD

The present disclosure relates to the field of Internet, and in particular to a method for data transmission, a cloud desktop virtual machine, a cloud terminal device, and a readable storage medium.

### BACKGROUND

At present, under the framework of Virtual Desktop Infrastructure (VDI) technology, because the desktop system runs in the cloud, it needs to transmit the picture to the user side through the desktop transmission protocol. Therefore, the quality of the network directly affects the user's experience and perception. How to reduce the impact of network quality on the user experience is the research direction of continuous optimization and key concern in cloud desktop products. Especially when the desktop is transmitted on the Internet, the network transmission efficiency is low under the condition of poor network quality, which obviously affects the user experience.

### SUMMARY

The following is a summary of the subject matter described herein. This summary is not intended to limit the scope of protection of the claims.

Provided are a method for data transmission, a cloud desktop virtual machine, a cloud terminal device, and a readable storage medium in some embodiments of the present disclosure.

According to a first aspect of the present disclosure, a method for data transmission is provided. The method is applied to a cloud desktop virtual machine. And the method includes: receiving a peripheral device input signal from a cloud terminal device; updating and capturing a target screen image according to the peripheral device input signal; comparing the target screen image with a cached screen image stored in a virtual machine cache area to obtain a comparison result; generating a cache hit instruction corresponding to a first cached screen image and sending the cache hit instruction to the cloud terminal device, in response to the comparison result indicating a presence in a virtual machine cache area of a first cached screen image that is identical to the target screen image, to allow the cloud terminal device to extract a second cached screen image corresponding to the cache hit instruction from a cloud terminal device cache area and display the second cached screen image; where the second cached screen image stored in the cloud terminal device cache area is obtained by a synchronization of the first cached screen image stored in the virtual machine cache area.

According to a second aspect of the present disclosure, a method for data transmission is provided. The method is applied to a cloud desktop virtual machine. And the method includes: receiving a peripheral device input signal from a cloud terminal device; performing user operation behavior recognition processing according to the peripheral device input signal to obtain a user operation behavior result; updating and capturing a target screen image according to the peripheral device input signal; comparing the target screen image with a cached screen image stored in a virtual machine cache area to obtain a comparison result; adjusting at least one image transmission parameter of the target screen image according to the user operation behavior result, in response to the comparison result indicating an absence in the virtual machine cache area of a cached screen image that is identical to the target screen image, and sending the adjusted target screen image to the cloud terminal device, to allow the cloud terminal device to display the adjusted target screen image.

According to a third aspect of the present disclosure, a method for data transmission is provided. The method is applied to a cloud terminal device. And the method includes: receiving a peripheral device input signal; sending the peripheral device input signal to the cloud desktop virtual machine, to allow the cloud desktop virtual machine to generate a cache hit instruction corresponding to a first cached screen image stored in the virtual machine cache area according to the peripheral device input signal; receiving the cache hit instruction from the cloud desktop virtual machine; and extracting a second cached screen image corresponding to the cache hit instruction from a cloud terminal device cache area according to the cache hit instruction, and displaying the second cached screen image; where the second cached screen image stored in the cloud terminal device cache area is obtained by a synchronization of the first cached screen image stored in the cloud desktop virtual machine cache area.

According to a fourth aspect of the present disclosure, a method for data transmission is provided. The method is applied to a cloud terminal device. And the method includes: receiving a peripheral device input signal; sending the peripheral device input signal to the cloud desktop virtual machine, to allow the cloud desktop virtual machine to obtain a user operation behavior result and a target screen image according to the peripheral device input signal, and adjusting an image transmission parameter of the target screen image according to the user operation behavior result to obtain an adjusted target screen image; and receiving the adjusted target screen image from the cloud desktop virtual machine and displaying the adjusted target screen image.

According to a fifth aspect of the present disclosure, a cloud desktop virtual machine is provided. The cloud desktop virtual machine includes: a signal receiving module, configured to receive a peripheral device input signal from a cloud terminal device; a screen image updating module, configured to update and capture a target screen image according to the peripheral device input signal; an image comparison module, configured to compare the target screen image with a cached screen image stored in the virtual machine cache area to obtain a comparison result; a behavior recognition engine module, configured to perform user operation behavior recognition processing according to peripheral device input signal to obtain a user operation behavior result and to send the user operation behavior result to the cloud terminal device; a cache hit instruction generation module, configured to generate a cache hit instruction corresponding to a first cached screen image and to send the cache hit instruction to the cloud terminal device, in response to the comparison result indicating a presence in a virtual machine cache area of a first cached screen image that is identical to the target screen image, to allow the cloud terminal device to extract a second cached screen image corresponding to the cache hit instruction from a cloud terminal device cache area and display the second cached screen image; where the second cached screen image stored in the cloud terminal device cache area is obtained by a synchronization of the first cached screen image stored in the virtual machine cache area; and a screen image adjustment module, configured to adjust an image transmission parameter of the target screen image according to the user operation behavior result, in response to the comparison result indicating an absence in the virtual machine cache area of a cached screen image that is identical to the target screen image, and to send the adjusted target screen image to the cloud terminal device, to allow the cloud terminal device to display the adjusted target screen image.

According to a sixth aspect of the present disclosure, a cloud terminal device is provided. The cloud terminal device includes: a peripheral device signal processing module, configured to receive a peripheral device input signal and send the peripheral device input signal to a cloud desktop virtual machine; a cache hit instruction module, configured to: receive a cache hit instruction from the cloud desktop virtual machine; extract a second cached screen image corresponding to the cache hit instruction from the cloud terminal device cache area according to the cache hit instruction and display the second cached screen image; where the second cached screen image in the cloud terminal device cache area is obtained by a synchronization of the first cached screen image in the cloud desktop virtual machine; a desktop image module, configured to receive an adjusted target screen image from the cloud desktop virtual machine and display the adjusted target screen image; and a behavior intelligent compensation module configured to receive the user operation behavior result from the cloud desktop virtual machine, and perform intelligent compensation processing on the adjusted target screen image according to the user operation behavior result.

According to a seventh aspect of the present disclosure, a controller is provided. The controller includes a memory, a processor, and a computer program stored in the memory and executable on the processor which, when is executed by the processor, causes the processor to carry out any one of the methods of the first to the fourth aspects as described above.

According to an eighth aspect of the present disclosure, a computer-readable storage medium is provided. The computer-readable storage medium stores thereon a computer-executable instruction which, when executed by a processor, causes the processor to carry out any one of the methods of the first to the fourth aspects as described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.
FIG 1 depicts a schematic diagram showing a system architecture platform in which a method for data transmission according to an embodiment of the present disclosure may be carried out;
FIG. 2 depicts a flowchart showing a method for data transmission according to an embodiment of the present disclosure; and
FIG. 3 depicts a flowchart showing a method for data transmission according to another embodiment of the present disclosure;
FIG. 4 depicts a flowchart showing a method for data transmission according to another embodiment of the present disclosure;
FIG. 5 depicts a flowchart showing a method for data transmission according to another embodiment of the present disclosure;
FIG. 6 depicts a flowchart showing a method for data transmission according to another embodiment of the present disclosure;
FIG. 7 depicts a schematic diagram showing a cloud desktop virtual machine according to an embodiment of the present disclosure;
FIG. 8 depicts a schematic diagram showing a cloud terminal device according to an embodiment of the present disclosure; and
FIG. 9 depicts a schematic diagram showing an architecture of a cloud desktop system according to an embodiment of the present disclosure.

### DETAILED DESCRIPTION

The purpose, technical scheme and advantages of the present invention will become apparent through the following description for various embodiments in conjunction with the drawings. It should be understood that the embodiments described here are intended for illustration but not limitation of the present invention.

It should be understood that in the description of embodiments of the present disclosure, the term "several" means one or more. Term "plurality" means two or more. Terms "greater than", "less than", "more than", etc. shall be understood to exclude the number being referred to. Terms "above", "below", "within", etc. shall be understood to include the number being referred to. Terms "first" and "second" if described, are intended for distinguishing technical features, which shall not be understood as indicating or implying relative importance or implicitly indicating the number of the indicated technical features or the order of the indicated technical features.

In the description of various embodiments of the present disclosure, the terms such as provide, mount, or connect should be broadly understood, unless otherwise specified, and those having ordinary skills in the art can reasonably determine the specific meanings of the above terms in various embodiments of the present disclosure in conjunction with the specific contents of the technical scheme.

Currently, under the framework of Virtual Desktop Infrastructure (VDI) technology, because the desktop system runs in the cloud, it is necessary to transmit the screen image to the user side through the desktop transmission protocol. Therefore, the quality of the network directly affects the user's experience and perception. How to reduce the impact of network quality on the user experience is the research direction of continuous optimization and key concern in cloud desktop products. Especially when the desktop images are transmitted on the Internet, the network transmission efficiency is low under the condition of poor network quality, which obviously affects the user experience.

In view of the poor network quality when transmitting desktop on the Internet, the network transmission efficiency is low, which obviously affects the user experience, a method for data transmission, a cloud desktop virtual machine, a cloud terminal device, and a readable storage medium are provided in some embodiments of the present disclosure. A method for data transmission is provided according to an embodiment of the present disclosure. The method includes: receiving, by a cloud desktop virtual machine, a peripheral device input signal from a cloud terminal device; updating and capturing, by the cloud desktop virtual machine, a target screen image according to the peripheral device input signal; performing user operation behavior recognition processing, by the cloud desktop virtual machine according to a peripheral device input signal to obtain a user operation behavior result; comparing, by the cloud desktop virtual machine, the target screen image with a cached screen image stored in a virtual machine cache area to obtain a comparison result; generating a cache hit instruction corresponding to a first cached screen image and sending the cache hit instruction to the cloud terminal device, in response to the comparison result indicating a presence in a virtual machine cache area of a first cached screen image that is identical to the target screen image, to allow the cloud terminal device to extract a second cached screen image corresponding to the cache hit instruction from a cloud terminal device cache area and display the second cached screen image; where the second cached screen image stored in the cloud terminal device cache area is obtained by a synchronization of the first cached screen image stored in the cloud desktop virtual machine. And an image transmission parameter of the target screen image is adjusted according to the user operation behavior result, in response to the comparison result indicating an absence of the same cached screen image as the target screen image in the virtual machine cache area, and the adjusted target screen image is sent to the cloud terminal, such that the cloud terminal device displays the adjusted target screen image. According to the scheme set forth in an embodiment of the present disclosure, the target screen image is updated and captured according to the peripheral device input signal from the cloud terminal device. The user operation behavior is recognized according to the peripheral device input signal to obtain the user operation behavior result. The target screen image is compared with a cached screen image in the virtual machine cache area. A cache hit instruction is sent to the cloud terminal device when the first cached screen image identical to the target screen image already exists in the cache area. And an image parameter of the target screen image is adjusted according to the user operation behavior result when there is no cached screen image identical to the target screen image in the cache area. The adjusted target screen image is then sent to the cloud terminal device. Thereby, it is possible to improve the network transmission efficiency of cloud desktop services, reduce the demand for network bandwidth of cloud desktop services, and improve the user experience.

Some embodiments of the present disclosure will be further illustrated with reference to the drawings.

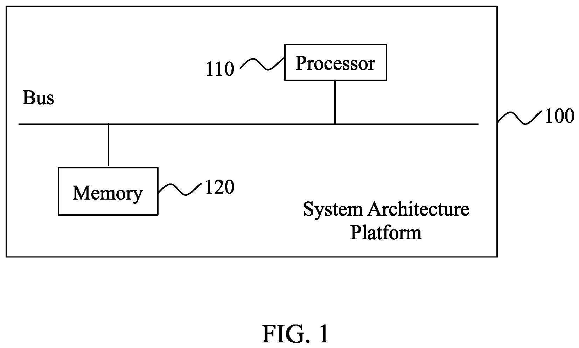

As shown in FIG. 1 which depicts a schematic diagram showing a system architecture platform in which a method for data transmission according to an embodiment of the present disclosure is carried out.

According to an embodiment, the system architecture platform 100 includes one or more processors 110 and a memory 120, while one processor 110 and one memory 120 are shown in FIG. 1 by way of example.

The processor 110 and the memory 120 may be connected by a bus or other means. The connection is shown as bus by way of an example in FIG. 1.

As a non-transitory computer-readable storage medium, the memory 120 can be configured to store non-transitory software programs and non-transitory computer-executable programs. In addition, the memory 120 can include high-speed random-access memory and non-transitory memory, such as at least one disk memory device, flash memory device, or other non-transitory solid-state memory devices. In some embodiments, the memory 120 may include the memory 120 remotely arranged with respect to the processor 110, and the remote memory may be connected to the system architecture platform 100 through a network. Examples of the above networks include, but are not limited to, the Internet, intranet, local area network, mobile communication network, and combinations thereof.

It can be understood by those having ordinary skills in the art that the device shown in FIG. 1 does not constitute a limitation to the system architecture platform 100 which may include more or less components than those shown, or some components may be combined, or have different component arrangements.

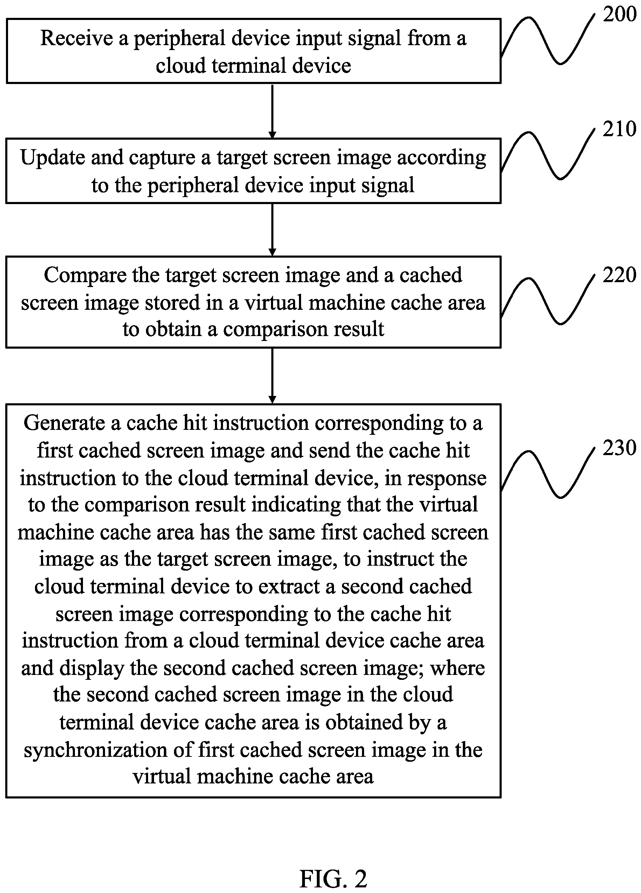

FIG. 2 depicts a flowchart showing a method for data transmission according to an embodiment of the present disclosure. The method includes but is not limited to operation S200, operation S210, operation S220 and operation S230.

At operation S200, a peripheral device input signal is received from a cloud terminal device.

At operation S210, a target screen image is updated and captured according to the peripheral device input signal.

At operation S220, the target screen image and a cached screen image stored in a virtual machine cache area are compared to obtain a comparison result.

At operation S230, a cache hit instruction corresponding to a first cached screen image is generated and sent to the cloud terminal device, in response to the comparison result indicating that the virtual machine cache area has the same first cached screen image as the target screen image, to instruct the cloud terminal device to extract a second cached screen image corresponding to the cache hit instruction from a cloud terminal device cache area and display the second cached screen image; where the second cached screen image in the cloud terminal device cache area is obtained by a synchronization of the first cached screen image in the virtual machine cache area.

In an embodiment of the present disclosure, the method for data transmission is applied to a cloud desktop virtual machine. The cloud desktop virtual machine is configured to receive a peripheral device input signal from a cloud terminal device. In an implementation, the peripheral device input signal includes but is not limited to a mouse signal and a keyboard signal. The cloud desktop virtual machine updates and captures a target screen image according to the peripheral device input signal. The target screen image is compared with a cached screen image stored in the virtual machine cache area to obtain a comparison result. A cache hit instruction corresponding to a first cached screen image is generated and sent to the cloud terminal device when the comparison result indicates that the virtual machine cache area has the same first cached screen image as the target screen image, to instruct the cloud terminal device to extract a second cached screen image corresponding to the cache hit instruction from the cloud terminal device cache area and display the second cached screen image. The second cached screen image stored in the cloud terminal device cache area is obtained by a synchronization of first cached screen image stored in the virtual machine cache area. The presence of the first cached screen image in the virtual machine cache area that is the same as the target screen image, indicates that the target screen image has been displayed and cached. Cached screen images in the cloud terminal device cache area are obtained by synchronization of the cached screen image stored in the virtual machine cache area. In other words, the second cached screen image is present in the cloud terminal device cache area, which is obtained by synchronization of the first cached screen image in the virtual machine cache area and is the same as the target screen image. Therefore, the cloud desktop virtual machine generates and sends the cache hit instruction corresponding to the first cached screen image to the cloud terminal device, to instruct the cloud terminal device to extract the second cached screen image according to the cache hit instruction and display the second cached screen image. Sending the cache hit instruction can make full use of the functions of the virtual machine cache area and the cloud terminal device cache area, reduce the amount of data transmitted over the network, improve the network transmission efficiency of cloud desktop services, reduce the demand of cloud desktop services for network bandwidth, and improve the user experience.

In addition, it should be noted that in an embodiment of the present disclosure, before receiving the peripheral device input signal from the cloud terminal device, the cloud desktop virtual machine receives a login instruction from the cloud terminal device to log the cloud terminal device into the cloud desktop virtual machine. The cloud desktop virtual machine captures and caches an initial screen image, and sends the initial screen image to the cloud terminal device, such that the cloud terminal device displays and caches the initial screen image. Before the initial screen image is sent to the cloud terminal device, the cloud desktop virtual machine encodes the initial screen image into a data stream. After receiving the data stream, the cloud terminal device decodes the data stream to obtain the initial screen image.

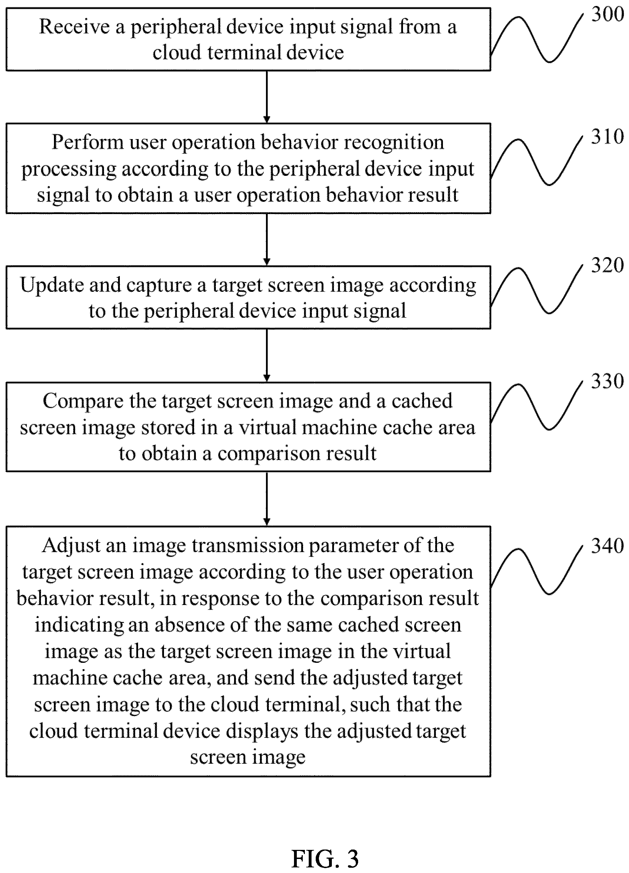

FIG. 3 depicts a flowchart showing a method for data transmission according to another embodiment of the present disclosure. The method includes but is not limited to operation S300, operation S310, operation S330 and operation S340.

At operation S300, a peripheral device input signal is received from a cloud terminal device.

At operation S310, user operation behavior recognition processing is performed according to the peripheral device input signal to obtain a user operation behavior result.

At operation S320, a target screen image is updated and captured according to the peripheral device input signal.

At operation S330, the target screen image and a cached screen image stored in a virtual machine cache area are compared to obtain a comparison result.

At operation S340, an image transmission parameter of the target screen image is adjusted according to the user operation behavior result, in response to the comparison result indicating an absence of the same cached screen image as the target screen image in the virtual machine cache area, and the adjusted target screen image is sent to the cloud terminal, such that the cloud terminal device displays the adjusted target screen image.

In an embodiment of the present disclosure, the method for data transmission is applied to a cloud desktop virtual machine. The cloud desktop virtual machine is configured to receive a peripheral device input signal from a cloud terminal device. In an implementation, the peripheral device input signal includes but is not limited to a mouse signal and a keyboard signal. The cloud desktop virtual machine performs user operation behavior recognition processing according to a peripheral device input signal to obtain a user operation behavior result. The cloud desktop virtual machine updates and captures a target screen image according to the peripheral device input signal. The target screen image is compared with the cached screen image stored in the virtual machine cache area to obtain a comparison result. An image transmission parameters of the target screen image is adjusted according to the user operation behavior result, in response to the comparison result indicates an absence of a cached screen image in the virtual machine cache area that is the same as the target screen image. The adjusted target screen image is sent to the cloud terminal device. As such, the cloud terminal displays the adjusted target screen image. Adjusting the image transmission parameter of the target screen image according to the user operation behavior result can improve the network transmission efficiency of cloud desktop services in different usage scenarios, reduce the network bandwidth requirements of cloud desktop services, and improve the user experience.

In addition, it should be noted that in an embodiment of the present disclosure, the image transmission parameter discussed above includes but is not limited to an encoding transmission parameter and a compression parameter. When the user operation behavior result indicates a switching operation, a low frame rate encoding parameter and a high compression ratio parameter are selected to adjust the target screen image. When the user operation behavior result indicates a stop and read operation, a high frame rate encoding parameter and a lossless compression parameter are selected to adjust the target screen image. When the user is reading, that is, the user operation behavior result indicates the stop and read operation, the image quality needs to be very good, and the high frame rate encoding parameter and lossless compression parameter are selected. If the user switches pages up and down, turns pages, scrolls and so on, that is, the user operation behavior result indicates a switching operation, fast and smooth switching is needed, and the low frame rate encoding parameter and the high compression ratio parameter are selected. When the screen area changes rapidly, such as video playback or image movements, it may be not easy for human eyes to sense the lost pixels. These areas will soon be covered by new data. But when it is transmitted to the static area of the screen, the human eye is very sensitive for the lost pixels, and lossless compression and high frame rate are needed in such a case. For example, the icons in the notification area or toolbar, or the text after scrolling to the position where the user started reading, the pixels in these areas can be presented in high definition.

In addition, it should be noted that in an embodiment of the present disclosure, the cloud desktop virtual machine sends the user operation behavior results to the cloud terminal device, such that the cloud terminal device performs intelligent compensation processing on the adjusted target screen image according to the user operation behavior result. The intelligent compensation processing includes but is not limited to text clarity compensation processing, color difference compensation processing, background tone compensation processing, and illustration compensation processing.

In addition, it should be noted that in an embodiment of the present disclosure, before receiving the peripheral device input signal from the cloud terminal device, the cloud desktop virtual machine receives a login instruction from the cloud terminal device to log the cloud terminal device into the cloud desktop virtual machine. The cloud desktop virtual machine captures and caches an initial screen image, and sends the initial screen image to the cloud terminal device, such that the cloud terminal device displays and caches the initial screen image. Before the initial screen image is sent to the cloud terminal device, the cloud desktop virtual machine encodes the initial screen image into a data stream. After receiving the data stream, the cloud terminal device decodes the data stream to obtain the initial screen image.

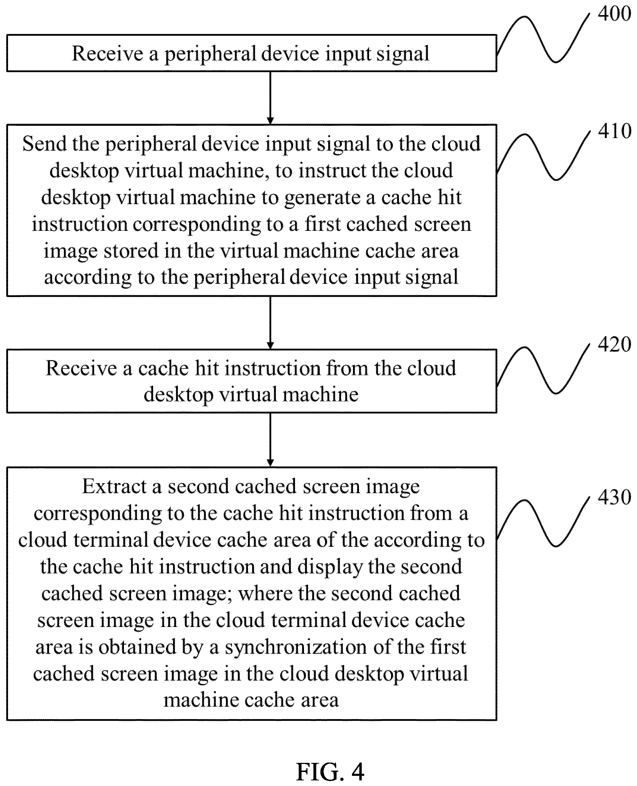

FIG. 4 depicts a flowchart showing a method for data transmission according to another embodiment of the present disclosure. The method includes but is not limited to operation S400, operation S410, operation S420 and operation S430.

At operation S400, a peripheral device input signal is received.

At operation S410, the peripheral device input signal is sent to the cloud desktop virtual machine, to instruct the cloud desktop virtual machine to generate a cache hit instruction corresponding to a first cached screen image stored in the virtual machine cache area according to the peripheral device input signal.

At operation S420, a cache hit instruction is received from the cloud desktop virtual machine.

At operation S430, a second cached screen image corresponding to the cache hit instruction is extracted from a cloud terminal device cache area according to the cache hit instruction and the second cached screen image is displayed; where the second cached screen image in the cloud terminal device cache area is obtained by a synchronization of the first cached screen image in the cloud desktop virtual machine cache area.

In an embodiment of the present disclosure, the method for data transmission is applied to a cloud terminal device. The cloud terminal device is configured to receive a peripheral device input signal. In an implementation, the peripheral device input signal includes but is not limited to a mouse signal and a keyboard signal. The cloud terminal device sends the peripheral device input signal to the cloud desktop virtual machine, to allow the cloud desktop virtual machine to generate a cache hit instruction corresponding to a first cached screen image in the virtual machine cache area according to the peripheral device input signal. It is noted that, the cloud desktop virtual machine updates and captures a target screen image according to the peripheral device input signal, compares the target screen image with a cached screen image stored in the virtual machine cache area to obtain a comparison result, and generates a cache hit instruction corresponding to a first cached screen image when the comparison result indicates that the virtual machine cache area has the same first cached screen image as the target screen image. The cloud terminal device receives the cache hit instruction from the cloud desktop virtual machine, extracts a second cached screen image corresponding to the cache hit instruction from the cloud terminal device cache area according to the cache hit instruction and displays the second cached screen image. The second cached screen image in the cloud terminal device cache area is obtained by a synchronization of the first cached screen image stored in the cloud desktop virtual machine. The presence of the first cached screen image in the virtual machine cache area that is the same as the target screen image, indicates that the target screen image has been displayed and cached. Cached screen images in the cloud terminal device cache area are obtained by synchronization of the cached screen image stored in the virtual machine cache area. In other words, the second cached screen image is present in the cloud terminal device cache area, which is obtained by synchronization of the first cached screen image in the virtual machine cache area and is the same as the target screen image. Therefore, the cloud terminal device receives the cache hit instruction from the cloud desktop virtual machine, extracts the second cached screen image from the cloud terminal device cache area according to the cache hit instruction and displays the second cached screen image. Sending the cache hit instruction can make full use of the functions of the virtual machine cache area and the cloud terminal device cache area, reduce the amount of data transmitted over the network, improve the network transmission efficiency of cloud desktop services, reduce the demand of cloud desktop services for network bandwidth, and improve the user experience.

In addition, it should be noted that, in an embodiment of the present disclosure, before receiving the peripheral device input signal, the cloud terminal device sends a login command to the cloud desktop virtual machine to log the cloud terminal device into the cloud desktop virtual machine, to receive the initial screen image from the cloud desktop virtual machine, and to display and cache the initial screen image. Before receiving the initial screen image from the cloud desktop virtual machine, the cloud desktop virtual machine encodes the initial screen image into a data stream. After receiving the data stream, the cloud terminal device decodes the data stream to obtain the initial screen image.

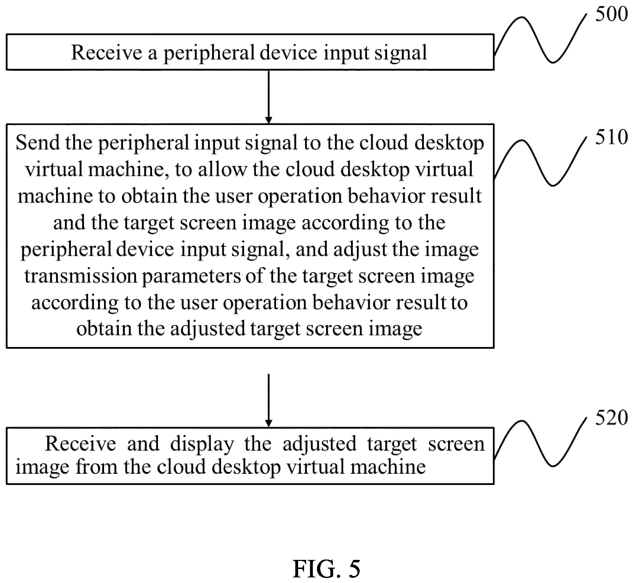

FIG. 5 depicts a flowchart showing a method for data transmission according to another embodiment of the present disclosure. The method includes but is not limited to operation S500, operation S510 and operation S520.

At operation S500, a peripheral device input signal is received.

At operation S510, the peripheral device input signal is sent to the cloud desktop virtual machine, to allow the cloud desktop virtual machine to obtain a user operation behavior result and a target screen image according to the peripheral device input signal, and adjust an image transmission parameter of the target screen image according to the user operation behavior result to obtain the adjusted target screen image.

At operation S520, the adjusted target screen image is received from the cloud desktop virtual machine, and displayed.

In an embodiment of the present disclosure, the method for data transmission is applied to a cloud terminal device. The cloud terminal device receives at least one peripheral device input signals. The peripheral device input signal includes but is not limited to a mouse signal and a keyboard signal. The cloud terminal device sends the peripheral device input signal to the cloud desktop virtual machine. As such, the cloud desktop virtual machine can obtain the user operation behavior result and a target screen image according to the peripheral device input signal, and adjust an image transmission parameter of the target screen image according to the user operation behavior result to obtain the adjusted target screen image. It should be noted that the cloud desktop virtual machine performs user operation behavior recognition processing according to the peripheral device input signal to obtain the user operation behavior result. The cloud desktop virtual machine updates and captures the target screen image according to the peripheral device input signal, compares the target screen image with the cached screen image in the virtual machine cache area to obtain a comparison result, and adjusts the image transmission parameter of the target screen image according to the user operation behavior result, and sends the adjusted target screen image to the cloud terminal device when the comparison result indicates the absence of a cached screen image in the virtual machine cache area that is identical to the target screen image. The cloud terminal device receives the adjusted screen image from the cloud desktop virtual machine and displays the adjusted screen image. Adjusting the image transmission parameter of the target screen image according to the user operation behavior result can improve the network transmission efficiency of cloud desktop services in different usage scenarios, reduce the network bandwidth requirements of cloud desktop services, and improve the user experience.

In addition, it should be noted that in an embodiment of the present disclosure, the image transmission parameter discussed above includes but is not limited to an encoding transmission parameter and a compression parameter. When the user operation behavior result indicates a switching operation, a low frame rate encoding parameter and a high compression ratio parameter are selected to adjust the target screen image. When the user operation behavior result indicates a stop and read operation, a high frame rate encoding parameter and a lossless compression parameter are selected to adjust the target screen image. When the user is reading, that is, the user operation behavior result indicates the stop and read operation, the image quality needs to be very good, and the high frame rate encoding parameter and lossless compression parameter are selected. If the user switches pages up and down, turns pages, scrolls and so on, that is, the user operation behavior result indicates a switching operation, fast and smooth switching is needed, and the low frame rate encoding parameter and the high compression ratio parameter are selected. When the screen area changes rapidly, such as video playback or image movements, it may be not easy for human eyes to sense the lost pixels. These areas will soon be covered by new data. But when it is transmitted to the static area of the screen, the human eye is very sensitive for the lost pixels, and lossless compression and high frame rate are needed in such a case. For example, the icons in the notification area or toolbar, or the text after scrolling to the position where the user started reading, the pixels in these areas can be presented in high definition.

In addition, it should be noted that in an embodiment of the present disclosure, the cloud terminal device receives the user operation behavior result from the cloud desktop virtual machine. The cloud terminal device performs intelligent compensation processing on the adjusted target screen image according to the user operation behavior result. The intelligent compensation processing above includes at least one of, text clarity compensation processing, color difference compensation processing, background color tone compensation processing, or illustration compensation processing.

In addition, it should be noted that, in an embodiment of the present disclosure, before receiving the peripheral device input signal, the cloud terminal device sends a login command to the cloud desktop virtual machine to log the cloud terminal device into the cloud desktop virtual machine, to receive the initial screen image from the cloud desktop virtual machine, and to display and cache the initial screen image. Before receiving the initial screen image from the cloud desktop virtual machine, the cloud desktop virtual machine encodes the initial screen image into a data stream. After receiving the data stream, the cloud terminal device decodes the data stream to obtain the initial screen image.

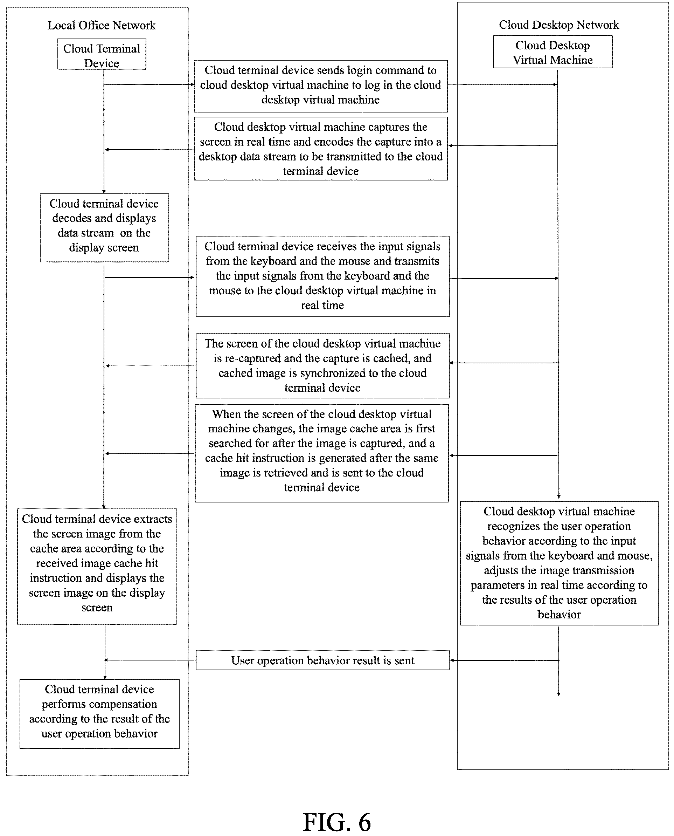

FIG. 6 depicts a flow chart showing an overall process of a method for data transmission according to another embodiment of the present disclosure. In this embodiment of the present disclosure, a cloud terminal device sends a login command to a cloud desktop virtual machine and logs in to the cloud desktop virtual machine. The cloud desktop virtual machine captures the screen in real time and encodes the capture into a desktop data stream to be transmitted to the cloud terminal device. The cloud terminal device decodes and displays the data stream on the display screen. The cloud terminal device receives the input signals from the keyboard and the mouse and transmits the input signals from the keyboard and the mouse to the cloud desktop virtual machine in real time. The screen of the cloud desktop virtual machine is re-captured, and the capture is cached. The cached image is synchronized to the cloud terminal device. When the screen of the cloud desktop virtual machine changes, the image cache area is first searched for after the image is captured, and a cache hit instruction is generated after the same image is retrieved. The cloud desktop virtual machine transmits the cache hit instruction to the cloud terminal device. The cloud terminal device extracts the screen image from the cache area according to the received image cache hit instruction and displays the screen image on the display screen. The cloud desktop virtual machine recognizes the user operation behavior according to the input signals from the keyboard and mouse, adjusts the image transmission parameters in real time according to the results of the user operation behavior, and enables the appropriate picture encoding strategy according to the user behavior scene to reduce the network bandwidth consumption. The cloud terminal device performs compensation according to the result of the user operation behavior. As such, the user experience is enhanced.

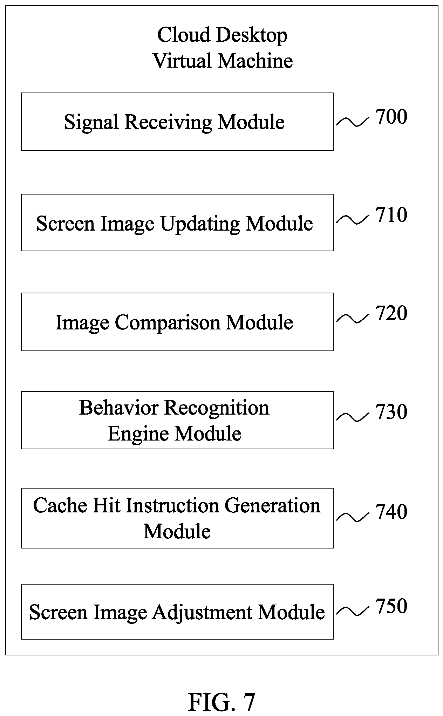

FIG. 7 depicts a schematic diagram showing a cloud desktop virtual machine according to an embodiment of the present disclosure. The cloud desktop virtual machine includes:
a signal receiving module 700, configured to receive a peripheral device input signal from a cloud terminal device;
a screen image updating module 710, configured to update and capture a target screen image according to the peripheral device input signal;
an image comparison module 720, configured to compare the target screen image with a cached screen image stored in the virtual machine cache area to obtain a comparison result;
a behavior recognition engine module 730, configured to perform user operation behavior recognition processing according to the peripheral device input signal to obtain a user operation behavior result and to send the user operation behavior result to the cloud terminal device;
a cache hit instruction generation module 740, configured to generate a cache hit instruction corresponding to a first cached screen image and sent the cache hit instruction to the cloud terminal device, in response to the comparison result indicating that the virtual machine cache area has the same first cached screen image as the target screen image, to instruct the cloud terminal device to extract a second cached screen image corresponding to the cache hit instruction from a cloud terminal device cache area and display the second cached screen image; where the second cached screen image in the cloud terminal device cache area is obtained by a synchronization of the first cached screen image in the cloud desktop virtual machine; and
a screen image adjustment module 750 configured to adjust an image transmission parameter of the target screen image according to the user operation behavior result, in response to the comparison result indicating an absence of the same cached screen image as the target screen image in the virtual machine cache area, and to send the adjusted target screen image to the cloud terminal device, such that the cloud terminal device displays the adjusted target screen image.

It should be noted that the contents of the method embodiment of the present disclosure are all applicable to the cloud desktop virtual machine embodiment, and the functions realized by the cloud desktop virtual machine embodiment are the same as those of the above method embodiment, and the beneficial effects achieved by the above method are also the same, so they are not repeated here.

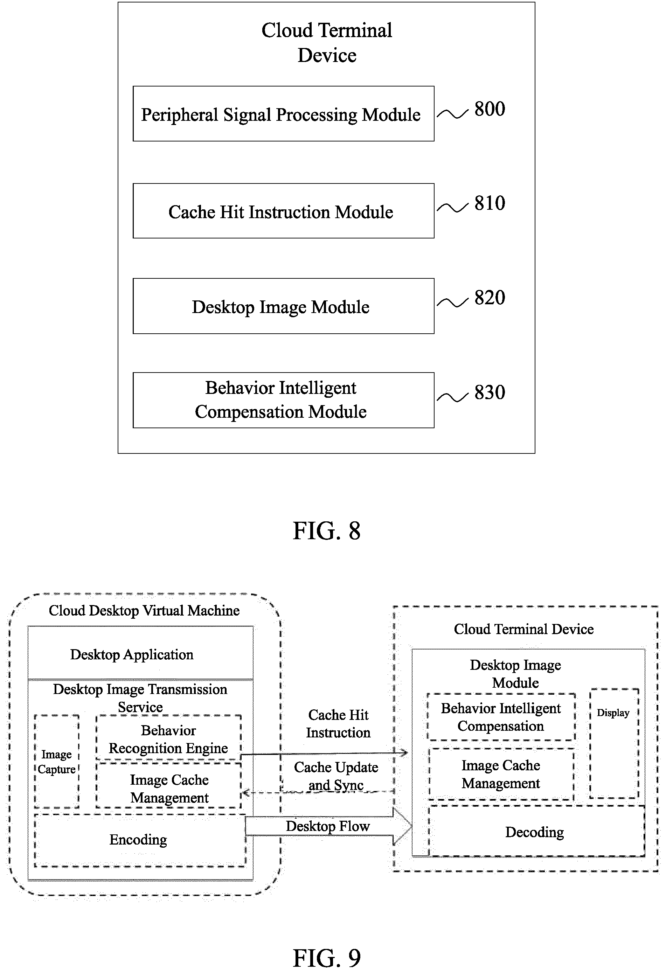

FIG. 8 depicts a schematic diagram showing a cloud terminal device according to an embodiment of the present disclosure. The cloud terminal device includes:
a peripheral signal processing module 800, configured to receive a peripheral device input signal and send the peripheral device input signal to a cloud desktop virtual machine;
a cache hit instruction module 810, configured to: receive a cache hit instruction from the cloud desktop virtual machine; extract a second cached screen image corresponding to the cache hit instruction from the cloud terminal device cache area according to the cache hit instruction and display the second cached screen image; where the second cached screen image in the cloud terminal device cache area is obtained by a synchronization of the first cached screen image in the cloud desktop virtual machine;
a desktop image module 820, configured to receive an adjusted target screen image from the cloud desktop virtual machine and display the adjusted target screen image; and
a behavior intelligent compensation module 830, configured to receive the user operation behavior result from the cloud desktop virtual machine, and perform intelligent compensation processing on the adjusted target screen image according to the user operation behavior result.

It should be noted that the contents of the method embodiment of the present disclosure are all applicable to the cloud terminal device embodiment, and the functions realized by the cloud terminal device embodiment are the same as those of the above method embodiment, and the beneficial effects achieved by the above method are also the same, so they are not repeated here.

FIG. 9 depicts a schematic diagram showing a cloud desktop system according to an embodiment of the present disclosure. In this embodiment of the present disclosure, a cloud desktop virtual machine is provided with a behavior recognition engine module and an image cache module. The behavior recognition engine module is configured to perform intelligent recognition on user operation behaviors. The image cache module is configured to manage screen images of the cloud desktop. The cloud terminal device is provided with a behavior intelligent compensation module and an image cache module. The behavior intelligent compensation module is configured to perform algorithmic compensation for user behavior results. The image cache module is configured to receive cached images transmitted by the cloud desktop and process the cache hit instructions. The cloud desktop virtual machine has an encoding module, which is configured to encode the screen image of the cloud desktop into a data stream and transmit the stream to the cloud terminal device. Correspondingly, the cloud terminal device also has a decoding module, which is configured to receive and decode the data stream transmitted by the cloud desktop virtual machine to obtain the screen image, and the display module displays the screen image.

According to an embodiment, a controller is provided, The controller includes a processor, a memory and a computer program stored on the memory and executable by the processor.

The processor and the memory can be connected by a bus or other means.

It shall be noted that, the controller in this embodiment can correspond to the processor and memory in the embodiment shown in FIG. 1, both of which belong to the same concept, so they have the same implementing principle and beneficial effects, and will not be described in detail here.

Non-transitory software programs and instructions for the method in the above embodiments are stored in memory which, when executed by a processor, causes the processor to carry out the method for data transmission in any one of the embodiments described above.

It is to be noted that the implementation and corresponding technical effects of the controller in this embodiment of the present disclosure correspond to the embodiments as described with respect to the method for data transmission, due to the controller that is included in the terminal device for implementing the method for data transmission.

In addition, an embodiment of the present disclosure further provides a computer-readable storage medium, which stores computer-executable instructions which, when executed by a processor or controller, for example, by a processor in the embodiment of the controller, causes the processor to carry out the method for data transmission of any one of the above embodiments, for example, operations S200 to S230 described in conjunction with FIG. 2, S300 to S340 described in conjunction with FIG. 3, S400 to S430 described in conjunction with FIG. 4, or S500 to S520 described in conjunction with FIG. 5.

A method for data transmission is provided according to an embodiment of the present disclosure. The method includes: receiving, by a cloud desktop virtual machine, a peripheral device input signal from a cloud terminal device; updating and capturing, by the cloud desktop virtual machine, a target screen image according to the peripheral device input signal; performing user operation behavior recognition processing, by the cloud desktop virtual machine according to the peripheral device input signal to obtain a user operation behavior result; comparing, by the cloud desktop virtual machine, the target screen image with a cached screen image stored in a virtual machine cache area to obtain a comparison result; generating a cache hit instruction corresponding to a first cached screen image and sending the cache hit instruction to the cloud terminal device, in response to the comparison result indicating a presence in a virtual machine cache area of a first cached screen image that is identical to the target screen image, to allow the cloud terminal device to extract a second cached screen image corresponding to the cache hit instruction from a cloud terminal device cache area and display the second cached screen image; where the second cached screen image stored in the cloud terminal device cache area is obtained by a synchronization of the first cached screen image stored in the cloud desktop virtual machine; and adjusting at least one image transmission parameter of the target screen image according to the user operation behavior result, in response to the comparison result indicating an absence in the virtual machine cache area of a cached screen image that is identical to the target screen image, and sending the adjusted target screen image to the cloud terminal device, to allow the cloud terminal device to display the adjusted target screen image. According to the scheme set forth in an embodiment of the present disclosure, the target screen image is updated and captured according to the peripheral device input signal from the cloud terminal device. The user operation behavior is recognized according to the peripheral device input signal to obtain the user operation behavior result. The target screen image is compared with a cached screen image in the virtual machine cache area. A cache hit instruction is sent to the cloud terminal device when the first cached screen image identical to the target screen image already exists in the cache area. And an image parameter of the target screen image is adjusted according to the user operation behavior result when there is no cached screen image identical to the target screen image in the cache area. The adjusted target screen image is then sent to the cloud terminal device. Thereby, it is possible to improve the network transmission efficiency of cloud desktop services, reduce the demand for network bandwidth of cloud desktop services, and improve the user experience.

It shall be appreciated by a person having ordinary skills in the art that all or some of the operations and systems disclosed above can be implemented as software, firmware, hardware, and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage media includes volatile and nonvolatile, removable, and non-removable media implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks ((DVD) or other optical disk storage, magnetic boxes, tapes, magnetic disk storage device or other magnetic storage device, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description for several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for data transmission, applied to a cloud desktop virtual machine, the method comprising:
receiving a peripheral device input signal from a cloud terminal device;
updating and capturing a target screen image according to the peripheral device input signal;
comparing the target screen image with a cached screen image stored in a virtual machine cache area to obtain a comparison result;
generating a cache hit instruction corresponding to a first cached screen image and sending the cache hit instruction to the cloud terminal device, in response to the comparison result indicating a presence in a virtual machine cache area of a first cached screen image that is identical to the target screen image, to allow the cloud terminal device to extract a second cached screen image corresponding to the cache hit instruction from a cloud terminal device cache area and display the second cached screen image; wherein the second cached screen image stored in the cloud terminal device cache area is obtained by a synchronization of the first cached screen image stored in the virtual machine cache area.

2. The method according to claim 1, wherein before receiving the peripheral device input signal from the cloud terminal device, the method further comprises:
receiving a login command from the cloud terminal device to log the cloud terminal device into the cloud desktop virtual machine;
capturing and caching an initial screen image, and sending the initial screen image to the cloud terminal device to enable the cloud terminal device to display and cache the initial screen image.

3. A method for data transmission, applied to a cloud desktop virtual machine, the method comprising:
receiving a peripheral device input signal from a cloud terminal device;
performing user operation behavior recognition processing according to the peripheral device input signal to obtain a user operation behavior result;
updating and capturing a target screen image according to the peripheral device input signal;
comparing the target screen image with a cached screen image stored in a virtual machine cache area to obtain a comparison result;
adjusting at least one image transmission parameter of the target screen image according to the user operation behavior result, in response to the comparison result indicating an absence in the virtual machine cache area of a cached screen image that is identical to the target screen image, and sending the adjusted target screen image to the cloud terminal device, to allow the cloud terminal device to display the adjusted target screen image.

4. The method according to claim 3, wherein the at least one image transmission parameter comprises an encoding parameter and a compression parameter;
accordingly, adjusting the at least one image transmission parameter of the target screen image according to the user operation behavior result comprises:
selecting and applying a low frame rate encoding parameter and a high compression ratio parameter to adjust the target screen image, in response to the user operation behavior result indicating a switching operation; and
selecting and applying a high frame rate encoding parameter and a lossless compression parameter to adjust the target screen image, in response to the user operation behavior result indicating a stop and read operation.

5. The method according to claim 3, further comprising:
sending the user operation behavior result to the cloud terminal device, to allow the cloud terminal device to perform an intelligent compensation processing on the adjusted target screen image according to the user operation behavior result.

6. The method according to claim 3, wherein before receiving the peripheral device input signal from the cloud terminal device, the method further comprises:
receiving a login command from the cloud terminal device to log the cloud terminal device into the cloud desktop virtual machine;
capturing and caching an initial screen image, and sending the initial screen image to the cloud terminal device to enable the cloud terminal device to display and cache the initial screen image.

7. A method for data transmission, applied to a cloud terminal device, the method comprising:
receiving a peripheral device input signal;
sending the peripheral device input signal to the cloud desktop virtual machine, to allow the cloud desktop virtual machine to generate a cache hit instruction corresponding to a first cached screen image stored in a virtual machine cache area according to the peripheral device input signal;
receiving the cache hit instruction from the cloud desktop virtual machine; and
extracting a second cached screen image corresponding to the cache hit instruction from a cloud terminal device cache area according to the cache hit instruction, and displaying the second cached screen image; wherein the second cached screen image stored in the cloud terminal device cache area is obtained by a synchronization of the first cached screen image stored in the cloud desktop virtual machine cache area.

8. The method according to claim 7, wherein before receiving the peripheral device input signal, the method further comprises:
sending a login command to the cloud desktop virtual machine to log the cloud terminal device into the cloud desktop virtual machine; and
receiving an initial screen image from the cloud desktop virtual machine, and displaying and caching the initial screen image.

9. A method for data transmission, applied to a cloud terminal device, the method comprising:
receiving a peripheral device input signal;
sending the peripheral device input signal to the cloud desktop virtual machine, to allow the cloud desktop virtual machine to obtain a user operation behavior result and a target screen image according to the peripheral device input signal, and adjusting an image transmission parameter of the target screen image according to the user operation behavior result to obtain an adjusted target screen image; and
receiving the adjusted target screen image from the cloud desktop virtual machine and displaying the adjusted target screen image.

10. The method according to claim 9, further comprising receiving the user operation behavior result from the cloud desktop virtual machine, and performing intelligent compensation processing on the adjusted target image according to the user operation behavior result.

11. The method according to claim 10, wherein the intelligent compensation processing comprises at least one of, text clarity compensation processing, color difference compensation processing, background color tone compensation processing, or illustration compensation processing.

12. A cloud desktop virtual machine, comprising:
a signal receiving module, configured to receive a peripheral device input signal from a cloud terminal device;
a screen image updating module, configured to update and capture a target screen image according to the peripheral device input signal;
an image comparison module, configured to compare the target screen image with a cached screen image stored in the virtual machine cache area to obtain a comparison result;
a behavior recognition engine module, configured to perform user operation behavior recognition processing according to peripheral device input signal to obtain a user operation behavior result and to send the user operation behavior result to the cloud terminal device;
a cache hit instruction generation module, configured to generate a cache hit instruction corresponding to a first cached screen image and sending the cache hit instruction to the cloud terminal device, in response to the comparison result indicating a presence in a virtual machine cache area of a first cached screen image that is identical to the target screen image, to allow the cloud terminal device to extract a second cached screen image corresponding to the cache hit instruction from a cloud terminal device cache area and display the second cached screen image; wherein the second cached screen image stored in the cloud terminal device cache area is obtained by a synchronization of the first cached screen image stored in the virtual machine cache area; and
a screen image adjustment module, configured to adjust an image transmission parameter of the target screen image according to the user operation behavior result, in response to the comparison result indicating an absence in the virtual machine cache area of a cached screen image that is identical to the target screen image, and to send the adjusted target screen image to the cloud terminal, to allow the cloud terminal device to display the adjusted target screen image.

13. A cloud terminal device, comprising:
a peripheral signal processing module, configured to receive a peripheral device input signal and send the peripheral input device signal to a cloud desktop virtual machine;
a cache hit instruction module, configured to: receive a cache hit instruction from the cloud desktop virtual machine; extract a second cached screen image corresponding to the cache hit instruction from the cloud terminal device cache area according to the cache hit instruction and display the second cached screen image; wherein the second cached screen image in the cloud terminal device cache area is obtained by a synchronization of the first cached screen image in the cloud desktop virtual machine;
a desktop image module, configured to receive an adjusted target screen image from the cloud desktop virtual machine and display the adjusted target screen image; and
a behavior intelligent compensation module, configured to receive the user operation behavior result from the cloud desktop virtual machine, and perform intelligent compensation processing on the adjusted target image according to the user operation behavior result.

14. A controller, comprising a memory, a processor and a computer program stored in the memory and executable by the processor which, when executed by the processor causes the processor to carry out the method as claimed in any one of claims 1 to 11.

15. A computer-readable storage medium storing a computer-executable instruction which, when executed by a processor, causes the processor to carry out the method according to any one of claims 1 to 11.
